# EUROPEAN PATENT APPLICATION

(11) **EP 3 404 470 A1**
(43) Date of publication of application: **21.11.2018**
(21) Application number: 16884814.1
(22) Date of filing: 13.01.2016
(51) Int. Cl.: G02C 5/16, G02C 5/22, G02C 11/00

(54) **GLASSES WITH MULTIPLE ATTACHMENT POSSIBILITIES**

(71) Applicant: Paulet Vazquez, Alberto, 28660 Boadilla del Monte (Madrid) (ES)
(72) Inventor: Paulet Vazquez, Alberto, 28660 Boadilla del Monte (Madrid) (ES)
(74) Representative: Falcon Morales, Alejandro
(86) International application number: PCT/ES2016/000003
(87) International publication number: WO 2017/121909

(57) **Abstract**

The object of the invention are glasses which comprise a frame (1) and a head attachment element (2) for the user's head where the head attachment element (2) and the frame (1) are connected through coupling means (3) comprising at least two pins (4) located on two protrusions (5) of the frame (1) with one pin (4) located on each protrusion (5) and each protrusion (5) located on one side end of the frame (1), and at least one housing (6) for pin (4) and protrusion (5), in the head attachment element (2), where the housing (6) comprises a recess (7) for the passage of the pins (4) and an opening (8) and a fixing space (9) where the pins are fixed by means of an elastic bungee.

## Description

### OBJECT OF THE INVENTION

The object of the invention is a pair of glasses comprising at least two different elements of attachment to the user's head, which are used independently of each other, so that the sidepieces can be replaced by a tape, supporting the central frame by means of a fixing mechanism that increases safety and prevents the attachment elements from being removed unintentionally.

### BACKGROUND OF THE INVENTION AND TECHNICAL PROBLEM TO BE SOLVED

The most delicate area of some glasses and the one that users want to protect the most is undoubtedly the area of the frame where the lenses are incorporated, because although a frame can be replaced and the lenses can be changed between some glasses with an adaptation to these lenses, if the lenses are lost, it is more complicated because they are manufactured according to the prescription of a particular user.

The area of the connection between the frame and the sidepieces is an area that usually suffers wear and tear and the traditional joint between the sidepieces and the frame is through an axis that is formed by a screw, this screw suffers tensions that lead to loosening and the need for relatively frequent tightening.

It is known that there are glasses that are specially developed for use in sports that, therefore, their only use in the sport for which they are developed; for example, those that are used for skiing and to play basketball. These glasses, instead of having sidepieces, have an elastic tape that fixes the frame to the user's face and do not require the usual screw that glasses with sidepieces have.

In addition, there are a number of textile or cords strings on the market that can attach to the sidepieces of the glasses, so that if the glasses fall off a user's face, they hang from the neck as to prevent the loss of the glasses.This system puts even more stress on the screw that acts as a connecting axis between the frame and the sidepieces, since the screw ends up supporting the final force resulting from the fall of the glasses.

However, there are no glasses on the market that have the double possibility of presenting traditional sidepieces and a tape that is firmly fixed to the user's face while playing sport, which eliminates the fastening screw at the sidepieces and the elastic tape fixed to the frame. This possibility allows the user to have a single set of prescription lenses tailored to the user that can be used as everyday glasses and also as sports glasses, for example, for skiing or basketball, saving the user the need to have two different glasses, with the cost involved, and avoiding the dependence on the screw fixing for glasses intended for sport.

In the field of glasses with various fastening systems, it should be noted that the applicant is familiar with European patent document EP 1 907 899 B1, which publishes this type of glasses comprising interchangeable sidepieces.

### TECHNICAL FIELD

The field of application for the present invention is framed within the industry sector dedicated to the manufacture of glasses, focusing particularly on the field of multifunctional glasses, more specifically on glasses with a plurality of head attachment elements that can be interchanged while supporting the frame of the glasses.

### EXPLANATION OF THE INVENTION

The object of the invention is glasses with multi-grip elements comprising a frame and a head attachment element for a user where the attachment element between the user's head and the frame is connected by means of a coupling.

The means of coupling for the glasses that are the subject of the invention comprises at least two pins located on two protrusions from the frame, with one pin located on each protrusion located on one side end of the frame, and it also comprises at least one pin housing and protrusion located on the head attachment element.

Each housing for the pin and protrusion located on the head attachment element includes a recess for the movement of the pins, an opening and a fixing space where the pins are housed.
The opening comprises a narrowing that allows the pins to access the fixing space where they are held by means of snap fit between the narrowing of the through-hole and the pins.

In the multi-grip glasses that are the object of the invention, the coupling means comprise pairs of opposing pins on each protrusion of the frame.

In the multi-grip glasses that are the object of the invention, the attachment to a user's head is an element to choose between two sidepieces, a tape and a combination of these.

In the multi-grip glasses the tape comprises two end pieces and an elastic band, so that the end pieces include the housing for the pin and protrusion.

The tape of the glasses that are the object of the invention comprises a means for adjusting the length of the tape, and each end piece is attached to the elastic band by means of a through-hole through which an end of the elastic band configured in the form of a looppasses.

### BRIEF DESCRIPTION OF THE DRAWINGS

To complement the description being made and in order to provide a better understanding of the features of the invention, it is accompanied as an integral part of this description by a set of drawings where the following has been represented with an illustrative and non-limiting nature:

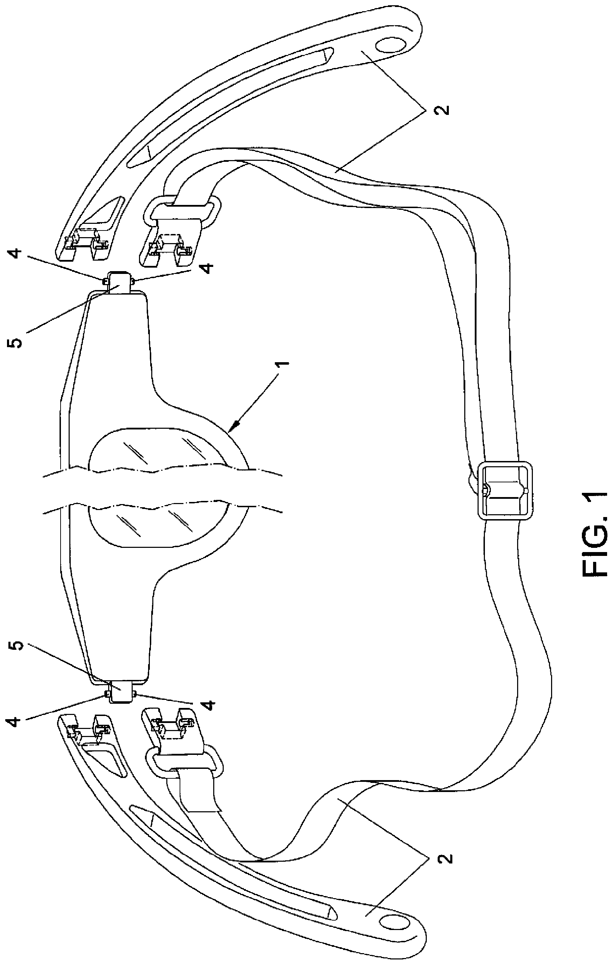

Figure 1.- Shows a perspective view of the glasses that are the object of the invention, with a frame and two head attachment elements.

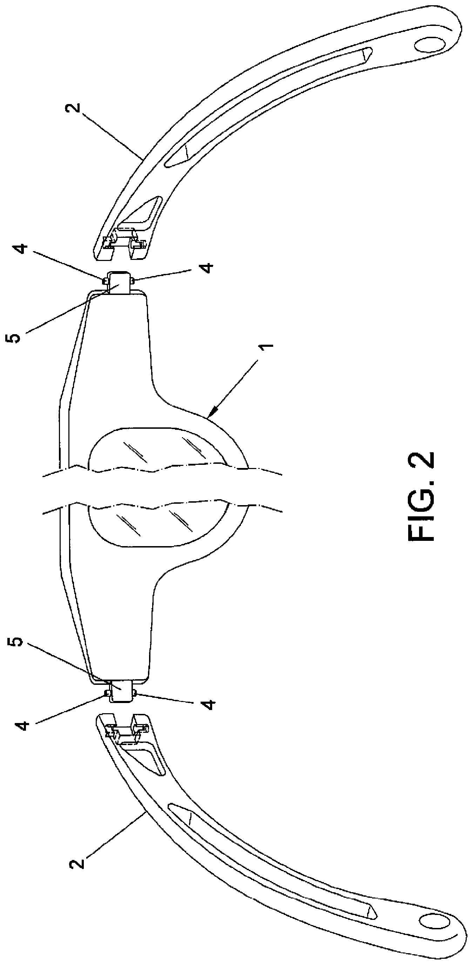

Figure 2.- Shows a perspective plan view of the glasses that are the object of the invention, with a frame and sidepieces as the head attachment elements.

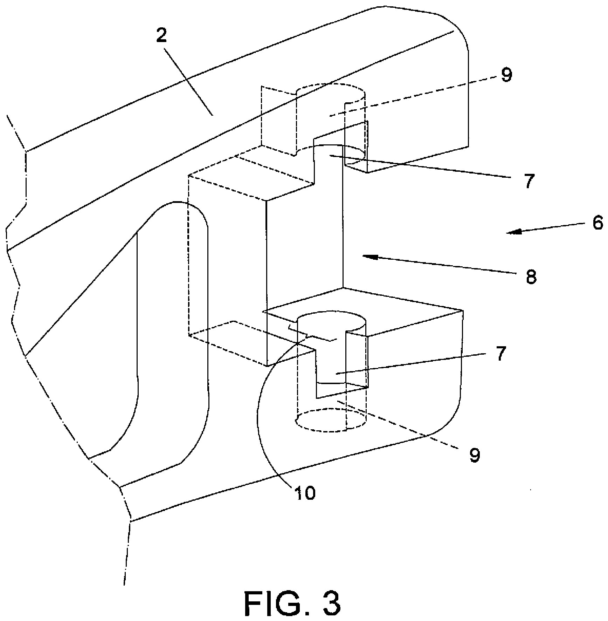

Figure 3.- Shows a detailed view of the part of the temple by which each temple is attached to the frame.

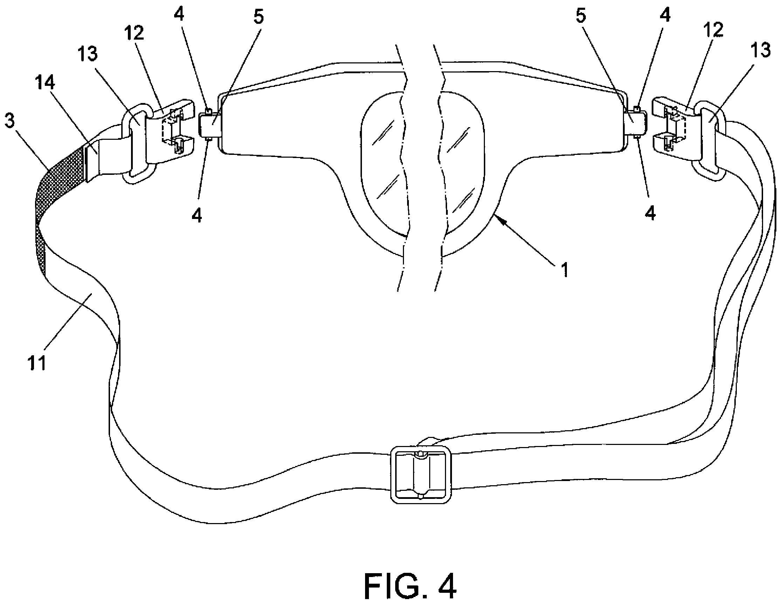

Figure 4.- Shows a perspective plan view of the glasses that are the object of the invention, with a frame and a tape as the head attachment element.

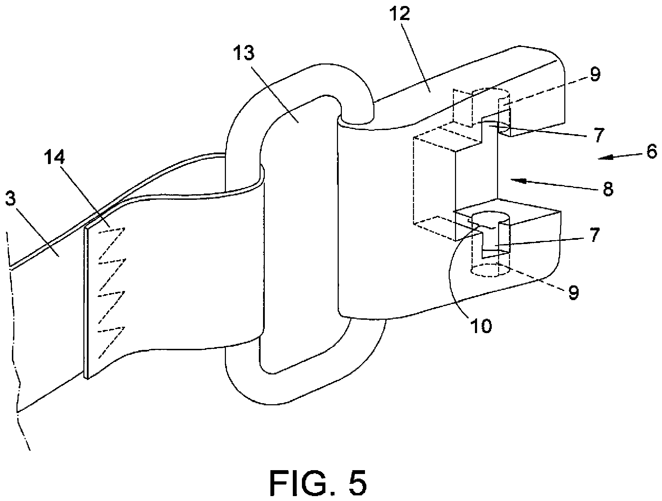

Figure 5.- Shows a detailed view of the end piece of the tape by which each tape is attached to the frame.

The numerical references used in the drawings are:
- **1.**: frame,
- **2.**: head attachment element,
- **3.**: elastic band,
- **4.**: pins,
- **5.**: protrusion,
- **6.**: housing,
- **7.**: recess,
- **8.**: opening,
- **9.**: fixing space,
- **10.**: narrowing,
- **11.**: tape,
- **12.**: end pieces,
- **13.**: through-hole, and
- **14.**: loop.

### PREFERRED EMBODIMENT OF THE INVENTION

In view of the aforementioned figures, and in accordance with the numbering adopted, several non-limitative embodiments of the disclosed glasses can be observed in them, which include the parts and elements that are indicated and described in detail below.

The object of the invention is a pair of glasses comprising a frame (1) and a head attachment element (2) for the frame (1). The head attachment element (2) has the characteristic that it can be removed from the frame (1) and replaced by a different element through an attachment mechanism that prevents the head attachment element (2) from loosening from the frame (1) without a series of movements that the user of the glasses must make. In addition, the glasses that are the object of the invention provide greater safety than glasses with a similar configuration in which the sidepieces are replaceable, as it is necessary to make a double movement of the connection piece through which the head attachment element (2) is attached to the frame, which increases the safety of the fixing of the head attachment element to the user's head compared to other similar glasses.

The glasses that are the object of the invention comprise two interchangeable head attachment elements (2), the advantage of which is that they can be used like traditional glasses by means of a single frame, with the head attachment element (2) configured as traditional sidepieces and it can also be used as glasses with a firmer head attachment than the sidepieces, so that the head attachment element (2) is configured by a tape (11) with end pieces (12) that are connected to the frame (1).

Either the sidepieces or the tape (11), i.e. the head attachment element (2) and the frame (1) of the glasses covered by the invention are connected by means of:
- two pairs of opposing pins (4) located on corresponding protrusions (5), each protrusion (5) located on one side end of the frame (1)
- at least one housing (6) for each pair of pins on the head attachment element (2), where the housing (6) includes a recess (7) for the passage of the pins (4) and a opening (8) and a fixing space (9) for the pins (4), such that the opening (8) includes a narrowing (10) which allows the pins (4) to enter the fixing space (9) and to be fixed in this fixing space (9) by snap fit between the pins (4) and the narrowing (10).

The tape (11) of the glasses that are the object of the invention comprises two end pieces (12) and one elastic band (3), such that the end pieces (12) comprise the housing (6) for the pin (4) and protrusion (5). The tape (11) comprises a means for regulating the length of the tape (11) known to the state of the art. Each end piece (12) is connected to the elastic band (3) by a through-hole (13) through which the elastic band (3) passes.

As the nature of the present invention, as well as the manner in which it is to be put into practice, has been sufficiently described, it is not considered necessary to expand its explanation so that any expert in the field may understand its scope and the advantages derived therefrom, it being understood that, within its essential nature, other embodiments may be carried out which differ in detail from that indicated by way of example, and to which the protection sought shall also apply provided that its fundamental principle is not altered, changed or modified.

## Claims

1. Glasses with multigrip comprising a frame (1) and a head attachment element (2) where the head attachment element (2) and the frame (1) are connected by means of:
- at least two pins (4) located on two protrusions (5) of the frame (1), with one pin (4) located on each protrusion (5) and each protrusion (5) located on one side end of the frame (1),
- at least one housing (6) for the pin (4) and protrusion (5), in a head attachment element (2),
where the housing (6) includes a recess (7) for the passage of the pins (4), an opening (8) and a fixing space (9) containing the pins (4), such that the opening (8) comprises a narrowing (10) which allows the pins (4) to enter the fixing space (9) and to be fixed in this fixing space (9) by snap fit between the narrowing (10) of the opening (8) and the pins (4).

2. Glasses with multigrip according to claim 1 **characterised in that** the coupling means (3) comprise a pair of opposing pins (4) on each protrusion (5) from the frame (1).

3. Glasses with multigrip according to the previous claims **characterised in that** the head attachment element (2) is an element chosen between twosidepieces, a tape (11) and a combination thereof.

4. Glasses with multigrip according to claim 3 **characterised in** fact that the tape (11) comprises two end pieces (12) and one elastic band (3), such that the end pieces (12) comprise the housing (6) for the pin (4) and the protrusion (5).

5. Glasses with multigrip according to claim 4 **characterised in that** the tape (11) comprises means to change the length of tape (11) and each end piece (12) is connected to the elastic band (3) by a through-hole (13) through which an end of the elastic band (3) configured in a form of a loop, passes (14).
